# EUROPÄISCHE PATENTSCHRIFT

(11) **EP 1 643 170 B1**
(45) Veröffentlichungstag und Bekanntmachung des Hinweises auf die Patenterteilung: **14.11.2007**
(21) Anmeldenummer: 05014731.3
(22) Anmeldetag: 07.07.2005
(51) Int. Cl.: F16J 15/08

(54) **Flachdichtung und Verfahren zum Herstellen einer Flachdichtung**
Flat gasket and method of making a flat gasket
Joint plat et sa méthode de fabrication

(30) Priorität: 30.09.2004 DE 102004047540
(43) Veröffentlichungstag der Anmeldung: 05.04.2006
(73) Patentinhaber: ElringKlinger AG, 72581 Dettingen (DE)
(72) Erfinder: Fritz, Wolfgang, 72555 Metzingen (DE)

(56) Entgegenhaltungen:
- EP-A- 1 116 904
- EP-A- 1 197 689
- DE-A1- 10 123 486
- DE-A1- 10 213 900
- DE-A1- 19 531 232
- DE-A1- 19 909 354
- US-B1- 6 257 591

## Beschreibung

Die vorliegende Erfindung betrifft eine Flachdichtung, insbesondere Zylinderkopfdichtung, die mindestens eine metallische Dichtungsplatte aus einem Federstahl oder aus einem metallischen Material mit einer Bruchdehnung, welche der Bruchdehnung eines Federstahls entspricht, umfasst.

Solche Flachdichtungen sind beispielsweise aus der DE 195 13 361 C1 bekannt. Diese Druckschrift offenbart eine metallische Zylinderkopfdichtung für eine Brennkraftmaschine, wobei die Zylinderkopfdichtung mindestens ein Deckblech aus Federstahl umfasst, welches mit um die Brennraum-Durchgangsöffnungen der Zylinderkopfdichtung herum verlaufenden Sicken versehen ist. Diese Sicken bewirken beim Verbau der Dichtung, dass sich die Kraft der Schrauben, mit denen die abzudichtenden Bauteile und die Dichtung gegeneinander verspannt werden, in eine Linienpressung längs der Sickenkuppen konzentriert.

Es ist ferner bekannt, eine Zylinderkopfdichtung zum Schutz der abdichtenden Sicken mit einer Verformungsbegrenzungseinrichtung (auch "Stopper" genannt) zu versehen, durch welche die höhenverformbaren Sicken gegen eine unzulässig starke Verformung geschützt werden. Eine solche Verformungsbegrenzungseinrichtung stellt zugleich eine partielle Verdickung der Zylinderkopfdichtung dar, durch welche die an die Zylinderkopfdichtung angrenzenden Motorbauteile so vorgespannt werden, dass die dynamische Dichtspaltschwingung reduziert wird.

Eine solche Verformungsbegrenzungseinrichtung kann beispielsweise dadurch hergestellt werden, dass ein zusätzlicher Ring auf eine der Lagen der Zylinderkopfdichtung aufgeschweißt wird oder dass Erhebungen in eine oder in mehrere Lagen der Zylinderkopfdichtung eingeprägt werden.

Ferner ist es, beispielsweise aus der DE 195 13 361 C1, bekannt, eine der gesickten Funktionslage aus Federstahl benachbarte Trägerlage der Zylinderkopfdichtung, die aus einem anderen Material mit geringerer Zugfestigkeit und höherer Bruchdehnung gebildet ist, mit einem längs des Randes der Brennraum-Durchgangsöffnung verlaufenden Bördelfalz zu versehen.

Die US-B1-6 257 591, die EP-A-1 197 689 und die DE 199 09 354 A1 offenbaren Flachdichtungen mit den Merkmalen des Oberbegriffs von Anspruch 1.

Die DE 101 23 486 A1 offenbart eine Zylinderkopfdichtung, die eine metallische Dichtungsplatte umfasst, welche mit einem Bördelfalz versehen ist, der einen Biegebereich und einen über den Biegebereich einstückig mit der Dichtungsplatte verbundenen Flanschbereich umfasst, wobei der Bördelfalz mehrere Einschnitte aufweist, die sich von einem dem Biegebereich abgewandten Außenrand des Flanschbereiches aus in Richtung auf den Biegebereich erstrecken. Die mittlere Länge der einschnittfreien Bereiche des Außenrandes des Flanschbereiches zwischen den in der Längsrichtung des Bördelfalzes aufeinanderfolgenden Einschnitten ist dabei kleiner als die mittlere Erstreckung der Einschnitte in der Längsrichtung des Bördelfalzes am Außenrand des Flanschbereiches.

Der vorliegenden Erfindung liegt die Aufgabe zugrunde, eine Flachdichtung der eingangs genannten Art mit einem neuartigen Aufbau zu schaffen.

Diese Aufgabe wird durch eine Flachdichtung nach Anspruch 1 gelöst.

Der vorliegenden Erfindung liegt also das Konzept zugrunde, einen Bördelfalz an der Dichtungsplatte aus Federstahl oder aus einem metallischen Material mit einer entsprechenden Bruchdehnung selbst auszubilden, so dass es nicht nötig ist, eine zusätzliche Trägerlage aus einem anderen Material mit einer höheren Bruchdehnung vorzusehen, um einen solchen Bördelfalz auszubilden.

Auf diese Weise kann die Anzahl der für den Aufbau der Flachdichtung benötigten Blechlagen verringert werden. Hierdurch wird der Materialverbrauch verringert werden, und zusätzliche, separate Arbeitsgänge werden eingespart.

Unter der Bruchdehnung eines metallischen Materials ist in dieser Beschreibung und in den beigefügten Ansprüchen stets die Bruchdehnung (A₈₀ₘₘ) bei einer Anfangsmesslänge von 80 mm gemäß der DIN EN 10 002, Teil 1 zu verstehen, also die bleibende Verlängerung der Messlänge nach dem Bruch (Lᵤ-L₀), bezogen auf die Anfangsmesslänge (L₀) bei einer Anfangsmesslänge (L₀) von 80 mm, angegeben in Prozent. Dabei bezeichnet Lᵤ die Messlänge nach dem Bruch der Probe im Zugbeanspruchungsversuch.

Die Bruchdehnung (A₈₀ₘₘ) bei einer Anfangsmesslänge von 80 mm des metallischen Materials der Dichtungsplatte liegt vorzugsweise im Bereich von ungefähr 5 % bis ungefähr 22 %.

Ferner liegt die Zugfestigkeit des metallischen Materials der Dichtungsplatte vorzugsweise bei mindestes ungefähr 1350 N/mm².

Dabei ist unter der Zugfestigkeit die in der DIN EN 10 002, Teil 1 definierte Zugfestigkeit Rₘ zu verstehen, das heißt die Spannung, die der Höchstzugkraft (Fₘ) im Zugbeanspruchungsversuch entspricht.

Die Höchstzugkraft Fₘ ist die größte Kraft, welche die Probe im Laufe des Zugbeanspruchungsversuchs nach Überschreiten der Streckgrenze ertragen hat.

Die mit dem Bördelfalz versehene Dichtungsplatte aus dem Federstahl oder dem federstahlähnlichen metallischen Material kann insbesondere eine Durchgangsöffnung aufweisen, wobei sich der Bördelfalz zumindest längs eines Abschnittes des Umfangs der Durchgangsöffnung erstreckt.

Insbesondere kann vorgesehen sein, dass sich der Bördelfalz zumindest teilweise um eine Brennraum-Durchgangsöffnung der Dichtungsplatte herum erstreckt.

Bei einer bevorzugten Ausgestaltung der Erfindung ist vorgesehen, dass sich der Bördelfalz um den gesamtem Umfang der Durchgangsöffnung herum erstreckt.

Die erfindungsgemäße Flachdichtung kann insbesondere eine sich um die Durchgangsöffnung herum erstreckende höhenverformbare Sicke aufweisen.

Besonders günstig ist es, wenn der Bördelfalz eine Verformungsbegrenzungseinrichtung bildet, welche die Höhenverformung der sich um die Durchgangsöffnung herum erstreckenden Sicke begrenzt. In diesem Fall dient der Bördelfalz also als "Stopper", welcher verhindert, dass die Sicke im verbauten Zustand auf Block gepresst wird, wodurch eine wesentliche Steigerung der Dauerhaltbarkeit der Sicke und somit der Lebenszeit der Flachdichtung erreicht wird.

Bei dieser Ausgestaltung der Erfindung ist die Verformungsbegrenzungseinrichtung für die Sicke besonders einfach und mit geringem Materialeinsatz herstellbar, da für die Verformungsbegrenzungseinrichtung keine zusätzlichen Blechlagen erforderlich sind.

Da die Dichtungsplatte aus einem Federstahl-Material oder einem federstahlähnlichen Material gebildet ist, welches gute elastische Eigenschaften aufweist, kann insbesondere vorgesehen sein, dass die Sicke an derselben Dichtungsplatte ausgebildet ist, welche auch mit dem Bördelfalz versehen ist.

Bei einer besonderen Ausgestaltung der erfindungsgemäßen Flachdichtung kann vorgesehen sein, dass die Flachdichtung zusätzlich zu dem Bördelfalz, der als innere Verformungsbegrenzungseinrichtung auf der der Durchgangsöffnung zugewandten Seite der Sicke angeordnet ist, eine äußere Verformungsbegrenzungseinrichtung umfasst, welche auf der der Durchgangsöffnung abgewandten Seite der Sicke angeordnet ist.

Der Aufbau der Flachdichtung gestaltet sich besonders einfach, wenn diese äußere Verformungsbegrenzungseinrichtung an derselben Dichtungsplatte angeordnet ist, welche auch mit dem Bördelfalz versehen ist.

Bei einer bevorzugten Ausgestaltung der Flachdichtung kann vorgesehen sein, dass die äußere Verformungsbegrenzungseinrichtung mindestens ein Verformungsbegrenzungselement umfasst, das durch Heraustrennen eines Bereichs einer Dichtungsplatte längs einer Trennlinie und anschließendes Herausbiegen dieses Bereichs aus der Ebene dieser Dichtungsplatte gebildet ist.

Vorzugsweise ist vorgesehen, dass der Flanschbereich auf die Dichtungsplatte selbst umgelegt ist.

Insbesondere kann vorgesehen sein, dass der Flanschbereich im wesentlichen flächig auf der dem Flanschbereich zugewandten Hauptfläche der Dichtungsplatte aufliegt.

Da das für die Dichtungsplatte verwendete metallische Material eine geringe Bruchdehnung aufweist, können ohne besondere Zusatzmaßnahmen nur Bördelfalze mit relativ schmalen Flanschbereichen, das heißt mit Flanschbereichen, welche nur eine geringe Ausdehnung senkrecht zur Biegelinie aufweisen, hergestellt werden, da beim Umlegen am Außenrand des Flanschbereiches sehr hohe Umfangsspannungen entstehen.

Um beliebig breite Flanschbereiche erzeugen zu können, ist vorgesehen, dass der Bördelfalz mehrere Einschnitte aufweist, die sich von einem dem Biegebereich abgewandten Außenrand des Flanschbereiches aus in Richtung auf den Biegebereich erstrecken.

Die Einschnitte weiten sich beim Umlegen des Flanschbereiches an ihrem dem Außenrand des Flanschbereiches zugewandten äußeren Ende auf, so dass keine oder nur noch geringe Umfangsspannungen entstehen und dadurch beliebig breite Flanschbereiche hergestellt werden können.

Dabei ist vorgesehen, dass die mittlere Länge der einschnittfreien Bereiche des Außenrandes des Flanschbereiches zwischen den in der Längsrichtung des Bördelfalzes aufeinanderfolgenden Einschnitten größer ist als die mittlere Erstreckung der Einschnitte in der Längsrichtung des Bördelfalzes am Außenrand des Flanschbereiches.

Besonders günstig ist es, wenn die mittlere Länge der einschnittfreien Bereiche des Außenrandes des Flanschbereiches zwischen den in der Längsrichtung des Bördelfalzes aufeinanderfolgenden Einschnitten mindestens doppelt so groß ist wie die mittlere Erstreckung der Einschnitte in der Längsrichtung des Bördelfalzes am Außenrand des Flanschbereiches.

Eine besonders starke Reduktion der Umfangsspannungen beim Umlegen wird erzielt, wenn sich mindestens einer der Einschnitte vom Außenrand des Flanschbereiches aus bis in den Biegebereich des Bördelfalzes hinein erstreckt.

Insbesondere kann vorgesehen sein, dass der Biegebereich einen dem Flanschbereich des Bördelfalzes abgewandten Innenrand aufweist und dass sich mindestens einer der Einschnitte vom Außenrand des Flanschbereiches aus über den Innenrand des Innenbereiches hinweg erstreckt.

Wenn sich der Bördelfalz zumindest abschnittsweise um eine Durchgangsöffnung mit einem Mittelpunkt herum erstreckt, so beträgt der auf den Mittelpunkt der Durchgangsöffnung bezogene Winkelabstand längs der Umfangsrichtung der Durchgangsöffnung aufeinanderfolgender Einschnitte insbesondere ungefähr 1 bis ungefähr 20°, vorzugsweise ungefähr 2° bis ungefähr 15°.

Der Bördelfalz kann durch Erzeugen der Einschnitte in einem Randbereich einer Durchgangsöffnung der Dichtungsplatte und anschließendes Umlegen des Randbereiches gebildet sein.

Die Einschnitte können beispielsweise durch mechanisches Schneiden, durch Stanzen oder durch Laserschneiden erzeugt sein.

Bei einer bevorzugten Ausgestaltung ist vorgesehen, dass die Einschnitte durch im wesentlichen materialverlustfreies Einschneiden in die Dichtungsplatte erzeugt sind. Hierbei verlaufen die seitlichen Ränder der Einschnitte vor dem Umlegen im wesentlichen parallel zueinander.

Bei einer bevorzugten Ausgestaltung der Flachdichtung ist ferner vorgesehen, dass die Flachdichtung mehrlagig ausgebildet ist.

Insbesondere kann die Flachdichtung neben der Dichtungsplatte, die mit dem Bördelfalz versehen ist, noch mindestens eine weitere Dichtungsplatte aus einem Federstahl oder aus einem metallischen Material mit einer Bruchdehnung, welche der Bruchdehnung eines Federstahls entspricht, umfassen.

Ferner kann vorgesehen sein, dass die Flachdichtung neben der Dichtungsplatte, die mit dem Bördelfalz versehen ist, noch mindestens eine weitere Dichtungsplatte umfasst, welche mit mindestens einer sich um eine Durchgangsöffnung herum erstreckenden Sicke versehen ist.

Insbesondere kann vorgesehen sein, dass die Flachdichtung neben der Dichtungsplatte, die mit dem Bördelfalz versehen ist, noch mindestens zwei weitere Dichtungsplatten umfasst, zwischen denen die Dichtungsplatte, die mit dem Bördelfalz versehen ist, angeordnet ist.

Bei einer weiteren Ausgestaltung der Erfindung ist vorgesehen, dass die Flachdichtung neben der Dichtungsplatte, die mit dem Bördelfalz versehen ist, noch mindestens eine Trägerplatte mit einer Abkröpfung umfasst.

Die Trägerplatte kann insbesondere aus einem metallischen Material mit einer höheren Bruchdehnung und/oder einer geringeren Zugfestigkeit als Federstahl gebildet sein.

Insbesondere kann vorgesehen sein, dass sich der Bördelfalz und die Abkröpfung um eine Durchgangsöffnung der Flachdichtung herum erstrecken und dass die Dichtungsplatte, die mit dem Bördelfalz versehen ist, zum Mittelpunkt der Durchgangsöffnung hin über die Trägerplatte, die mit der Abkröpfung versehen ist, übersteht.

Um die für die Sickenverformungsbegrenzung wirksame Höhe des Flanschbereiches des Bördelfalzes, der eine Dicke von beispielsweise ungefähr 0,20 mm bis 0,25 mm aufweist, zu reduzieren, kann eine andere Platte der Flachdichtung in ihrer Dicke partiell, beispielsweise durch Prägen, reduziert werden.

Insbesondere kann vorgesehen sein, dass ein abgekröpfter Bereich einer mit einer Abkröpfung versehenen Trägerplatte sich um eine Durchgangsöffnung herum erstreckt und einen der Durchgangsöffnung zugewandten inneren Abschnitt und einen der Durchgangsöffnung abgewandten äußeren Abschnitt umfasst, wobei der innere Abschnitt eine geringere Dicke aufweist als der äußere Abschnitt.

Alternativ oder ergänzend hierzu kann vorgesehen sein, dass die Flachdichtung neben der Dichtungsplatte, die mit dem Bördelfalz versehen ist, mindestens eine weitere Dichtungsplatte umfasst, die in dem Bereich, welcher der Lage des Flanschbereiches des Bördelfalzes entspricht, eine reduzierte Dicke aufweist.

Zur Mikroabdichtung von Bearbeitungsriefen an den Dichtungsplatten bzw. der Rauhigkeit der Walzoberflächen der Bleche, aus denen die Dichtungsplatten hergestellt sind, werden die Dichtungsplatten vorzugsweise ganz oder bereichsweise, ein- oder beidseitig, mit einer Elastomerbeschichtung versehen.

Der Erfindung liegt die weitere Aufgabe zugrunde, ein neuartiges Verfahren zum Herstellen einer Flachdichtung, insbesondere einer Zylinderkopfdichtung, zu schaffen, die mindestens eine metallische Dichtungsplatte aus einem Federstahl oder aus einem metallischen Material mit einer Bruchdehnung, welche der Bruchdehnung eines Federstahls entspricht, umfasst.

Diese Aufgabe wird erfindungsgemäß durch ein Verfahren nach Anspruch 24 gelöst.

Besondere Ausgestaltungen dieses Verfahrens sind Gegenstand der Ansprüche 25 und 26, deren Vorteile bereits vorstehend im Zusammenhang mit der erfindungsgemäßen Flachdichtung erläutert worden sind.

Weitere Merkmale und Vorteile der Erfindung sind Gegenstand der nachfolgenden Beschreibung und der zeichnerischen Darstellung von Ausführungsbeispielen.

In den Zeichnungen zeigen:
- Fig. 1: eine schematische Draufsicht auf eine metallische Dichtungsplatte einer Zylinderkopfdichtung, wobei die Dichtungsplatte Brennraum-Durchgangsöffnungen aufweist, deren Randbereiche mit Einschnitten versehen sind;
- Fig. 2: eine vergrößerte Darstellung der in Fig. 1 links dargestellten Brennraum-Durchgangsöffnung;
- Fig. 3: eine vergrößerte Darstellung der in Fig. 1 in der Mitte dargestellten Brennraum-Durchgangsöffnung;
- Fig. 4: eine vergrößerte Darstellung der in Fig. 1 rechts dargestellten Brennraum-Druchgangsöffnung;
- Fig. 5: eine schematische perspektivische, teilweise geschnittene Darstellung einer gesickten metallischen Dichtungsplatte mit einem Bördelfalz, der mit Einschnitten versehen ist, welche sich vom Außenrand des Bördelfalzes bis in den Biegebereich des Bördelfalzes hinein erstrecken;
- Fig. 6: einen schematischen Schnitt durch die Dichtungsplatte aus Fig. 5 im Bereich eines der Einschnitte des Bördelfalzes;
- Fig. 7: eine schematische perspektivische, teilweise geschnittene Darstellung einer gesickten metallischen Dichtungsplatte mit einem Bördelfalz, der mit Einschnitten versehen ist, die sich von dem Außenrand des Bördelfalzes in Richtung auf den Biegebereich des Bördelfalzes erstrecken;
- Fig. 8: einen schematischen Schnitt durch die Dichtungsplatte aus Fig. 7 im Bereich eines der Einschnitte des Bördelfalzes;
- Fig. 9: einen Ausschnitt aus einem schematischen Schnitt durch eine zweilagige Flachdichtung, wobei eine Lage der Flachdichtung mit einer Sicke und mit einem Bördelfalz und die zweite Lage der Flachdichtung mit einer Sicke versehen ist;
- Fig. 10: einen Ausschnitt aus einem schematischen Schnitt durch eine dreilagige Flachdichtung, wobei zwei äußere Lagen der Dichtung mit einer Sicke versehen sind und eine mittlere Lage der Dichtung mit einer Sicke und mit einem Bördelfalz versehen ist;
- Fig. 11: einen Ausschnitt aus einem schematischen Schnitt durch eine dreilagige Flachdichtung, wobei eine äußere Lage der Flachdichtung mit einer Sicke versehen ist, eine weitere äußere Lage der Flachdichtung mit einer Sicke und mit einem Bördelfalz versehen ist und eine mittlere Trägerlage der Dichtung mit einer Abkröpfung versehen ist;
- Fig. 12: einen Ausschnitt aus einem schematischen Schnitt durch eine dreilagige Flachdichtung, wobei eine äußere Lage der Flachdichtung mit einer Sicke versehen ist, eine weitere äußere Lage der Flachdichtung mit einer Sicke und mit einem Bördelfalz versehen ist und eine mittlere Trägerlage der Dichtung mit einer Abkröpfung und mit einem Randbereich mit reduzierter Dicke versehen ist;
- Fig. 13: einen Ausschnitt aus einem schematischen Schnitt durch eine dreilagige Flachdichtung, wobei eine äußere Lage der Flachdichtung mit einer Sicke versehen ist, eine weitere äußere Lage der Flachdichtung mit einer Sicke und mit einem Bördelfalz versehen ist und eine mittlere Trägerlage der Flachdichtung mit einer Abkröpfung versehen ist, wobei die mit dem Bördelfalz versehene Dichtungslage über die Trägerlage hinaus zur Mitte einer Durchgangsöffnung der Flachdichtung vorsteht; und
- Fig. 14: einen Ausschnitt aus einem schematischen Schnitt durch eine dreilagige Flachdichtung, wobei zwei äußere Lagen der Flachdichtung mit jeweils einer Sicke versehen sind und eine mittlere Lage der Flachdichtung mit einer Sicke, einem Bördelfalz und einer äußeren Sickenverformungsbegrenzungseinrichtung mit einem aus der Dichtungslage herausgeschnittenen und auf die Dichtungslage umgebogenen Verformungsbegrenzungselement versehen ist.

Gleiche oder funktional äquivalente Elemente sind in allen Figuren mit denselben Bezugszeichen bezeichnet.

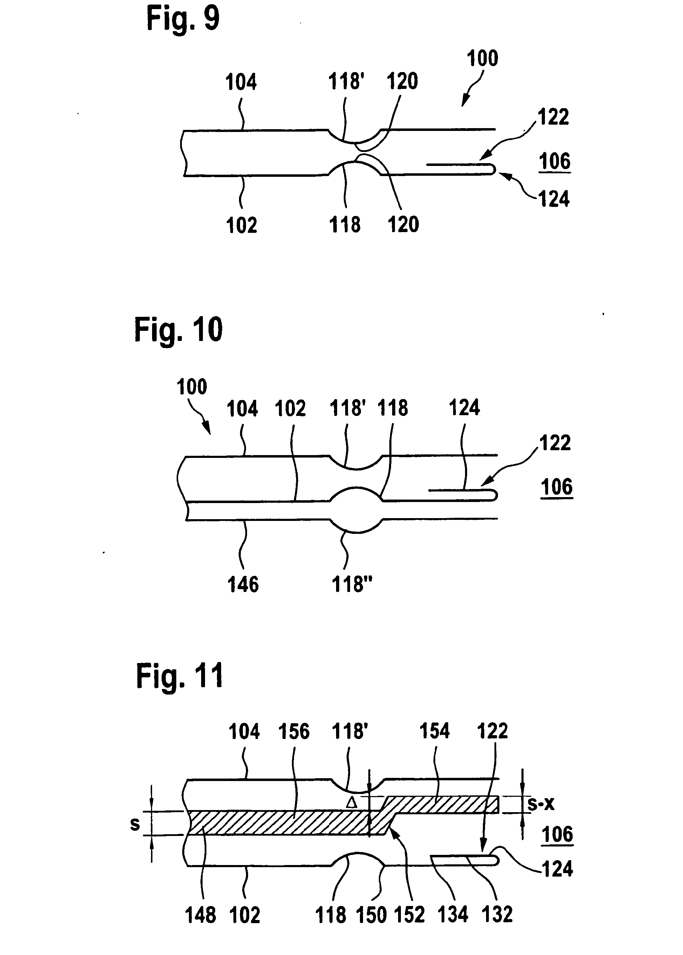

Ein in den Fig. 9 und 1 bis 6 dargestellte erste Ausführungsform einer als Ganzes mit 100 bezeichneten Zylinderkopfdichtung umfasst eine erste metallische Dichtungsplatte 102 und eine zweite metallische Dichtungsplatte 104, welche beide mit jeweils miteinander fluchtenden Brennraum-Durchgangsöffnungen 106, Ölkanal-Durchgangsöffnungen 108, Wasserkanal-Durchgangsöffnungen 110, Befestigungsschrauben-Durchgangsöffnungen 112, Passschrauben-Durchgangsöffnungen 114 und Niet-Durchgangsöffnungen 116 versehen sind.

Die erste metallische Dichtungsplatte 102 ist aus einem elastischen Federstahlblech, beispielsweise aus einem Blech des Federstahls mit der Werkstoffnummer 1.4310 (DIN 17440 oder EN 10088-3) hergestellt.

Der Federstahl der Werkstoffnummer 1.4310 weist die folgende chemische Zusammensetzung auf: 0,05 - 0,15 Gewichts-Prozent C; maximal 2,00 Gewichts-Prozent Si; maximal 2,00 Gewichts-Prozent Mn; maximal 0,045 Gewichts-Prozent P; maximal 0,015 Gewichts-Prozent S; 16,00 - 19,00 Gewichts-Prozent Cr; maximal 0,80 Gewichts-Prozent Mo; 6,00 - 9,50 Gewichts-Prozent Ni; maximal 0,11 Gewichts-Prozent N; Rest Fe.

Das Material der ersten metallischen Dichtungsplatte weist vorzugsweise eine Zugfestigkeit von mindestens 1350 N/mm² und eine Bruchdehnung (A₈₀ₘₘ) bei einer Anfangsmesslänge von 80 mm von ungefähr 5 % bis ungefähr 22 % auf.

Die zweite metallische Dichtungsplatte 104 kann aus demselben Material hergestellt sein wie die erste metallische Dichtungsplatte 102.

Jede der Dichtungsplatten 102, 104 ist mit jeweils mindestens einer Sicke 118 bzw. 118' versehen, welche sich um jeweils eine der Brennraum-Durchgangsöffnungen 106 herum erstreckt. Es kann auch vorgesehen sein, dass jede der Dichtungsplatten 102, 104 nur mit jeweils einer Sicke 118 bzw. 118' versehen ist, welche sich um alle Brennraum-Durchgangsöffnungen 106 der jeweiligen Dichtungsplatte 102, 104 herum erstreckt.

Die einander zugewandten Kuppen dieser Sicken 118 der Dichtungsplatten 102 und 104 bilden jeweils eine Abdichtlinie 120 der betreffenden Dichtungsplatte 102, 104.

Die die Brennraum-Durchgangsöffnungen 106 umgebenden Sicken 118 sind elastisch höhenverformbar.

Um eine Beschädigung der Sicken 118 aufgrund der im Betrieb des Verbrennungsmotors auftretenden Dichtspaltvariationen zu vermeiden, umfasst die Zylinderkopfdichtung 100 eine Verformungsbegrenzungseinrichtung 122, welche als ein an der ersten metallischen Dichtungsplatte 102 ausgebildeter Bördelfalz 124 ausgebildet ist.

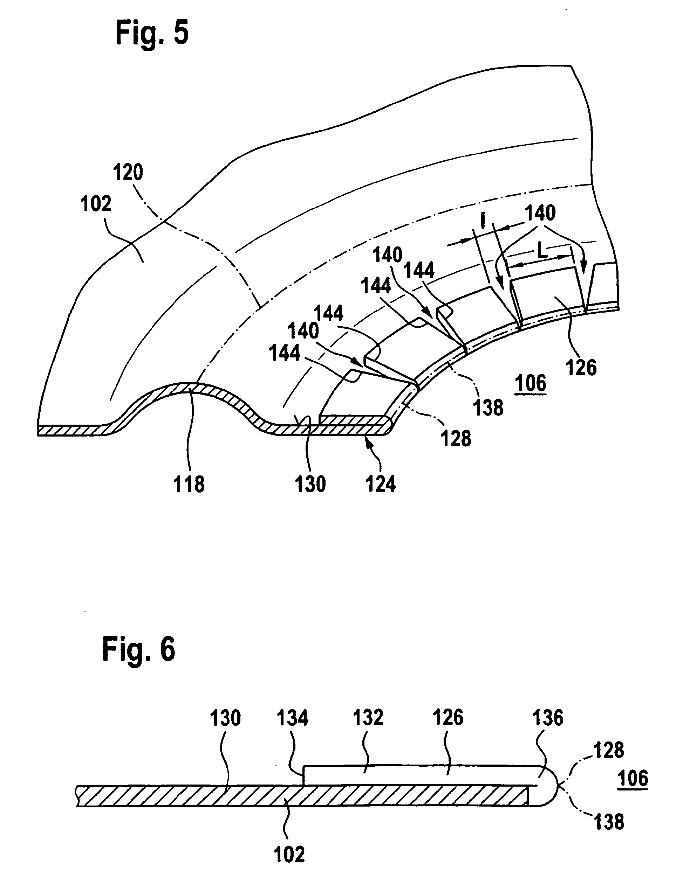

Der Bördelfalz 124 ist, wie am besten aus den Fig. 5 und 6 zu ersehen ist, zwischen der Sicke 118 der ersten metallischen Dichtungsplatte 102 und jeweils einer Brennraum-Durchgangsöffnung 106 angeordnet und dadurch gebildet, dass der Randbereich 126 der betreffenden Brennraum-Durchgangsöffnung 106 um eine im wesentlichen kreisringförmige Biegelinie 128 aus der Ebene der Dichtungsplatte 102 herausgebogen und auf die obere Hauptfläche 130 der Dichtungsplatte 102 umgelegt worden ist.

Wie am besten aus den Fig. 5 und 6 zu ersehen ist, umfasst der Bördelfalz 124 somit einen Flanschbereich 132 mit einem der Brennraum-Durchgangsöffnung 106 abgewandten Außenrand 134, der über einen im wesentlichen U-förmig gebogenen Biegebereich 136 einstückig mit der Dichtungsplatte 102 verbunden ist.

Die Biegelinie 128 bildet im fertigen Zustand der Dichtungsplatte 102 einen mittigen Innenrand 138 des Biegebereichs 136.

Im vollständig umgebogenen Zustand liegt der Flanschbereich 132 des Bördelfalzes 124 mit seiner der Dichtungsplatte 102 zugewandten Unterseite im wesentlichen vollflächig auf der oberen Hauptfläche 130 der Dichtungsplatte 102 auf.

Der Flanschbereich 132 erhöht somit im Bereich des Bördelfalzes 124 die Dicke der ersten Dichtungsplatte 102, so dass die Sicken 118 der Dichtungsplatten 102, 104 nicht mehr auf Block verformt und somit nicht beschädigt werden können.

Da das für die erste Dichtungsplatte 102 verwendete Federstahlblech nur eine geringe Bruchdehnung aufweist, können ohne besondere Zusatzmaßnahmen nur Bördelfalze 124 mit schmalen Flanschbereichen 132, das heißt mit Flanschbereichen 132, welche nur eine geringe Ausdehnung senkrecht zur Biegelinie 128 aufweisen, hergestellt werden, da beim Umfalzen des Randbereichs 126 der Brennraum-Durchgangsöffnung 106 nach außen sehr hohe Umfangsspannungen entstehen.

Um Bördelfalze 124 mit beliebig breiten Flanschbereichen 132 herstellen zu können, wird im Randbereich 126 der jeweiligen Brennraum-Durchgangsöffnung 106 vor dem Umlegen des Randbereichs 126 eine Vielzahl von Einschnitten 140 erzeugt, welche sich vom Rand der Brennraum-Durchgangsöffnung 106 aus radial nach außen erstrecken und längs der Umfangsrichtung der Brennraum-Durchgangsöffnung 106 im wesentlichen äquidistant aufeinander folgen.

Die Winkelabstände längs der Umfangsrichtung der Brennraum-Durchgangsöffnung 106 aufeinanderfolgender Einschnitte 140 liegen vorzugsweise zwischen ungefähr 1° und ungefähr 20°.

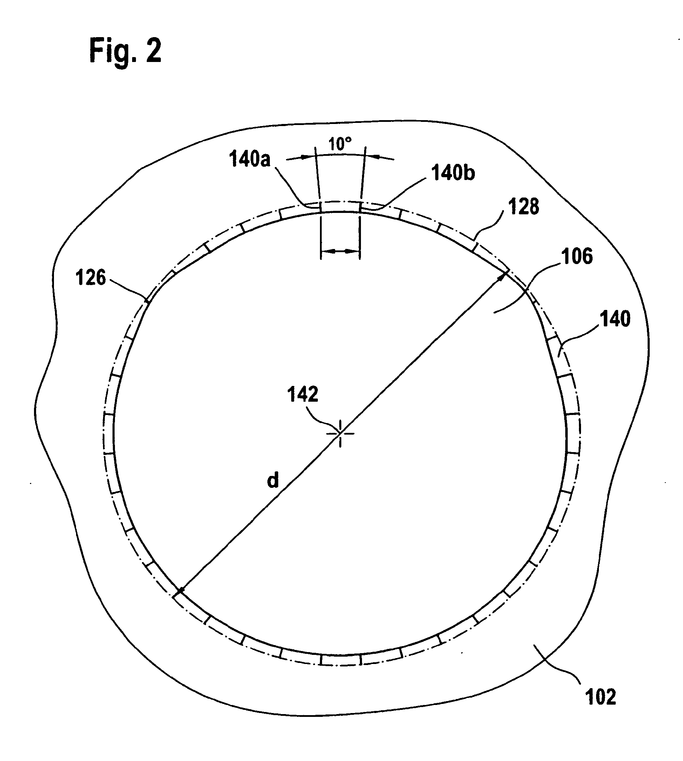

Bei dem in Fig. 2 dargestellten Ausführungsbeispiel beträgt der Winkelabstand zwischen aufeinanderfolgenden Einschnitten 140, bezogen auf den Mittelpunkt 142 der Brennraum-Durchgangsöffnung 106, jeweils 10°. Dabei wird der Winkelabstand zwischen einander entsprechenden Elementen der Einschnitte 140, also beispielsweise zwischen dem linken Rand des ersten Einschnitts 140a und dem entsprechenden linken Rand des zweiten Einschnitts 140b, gemessen.

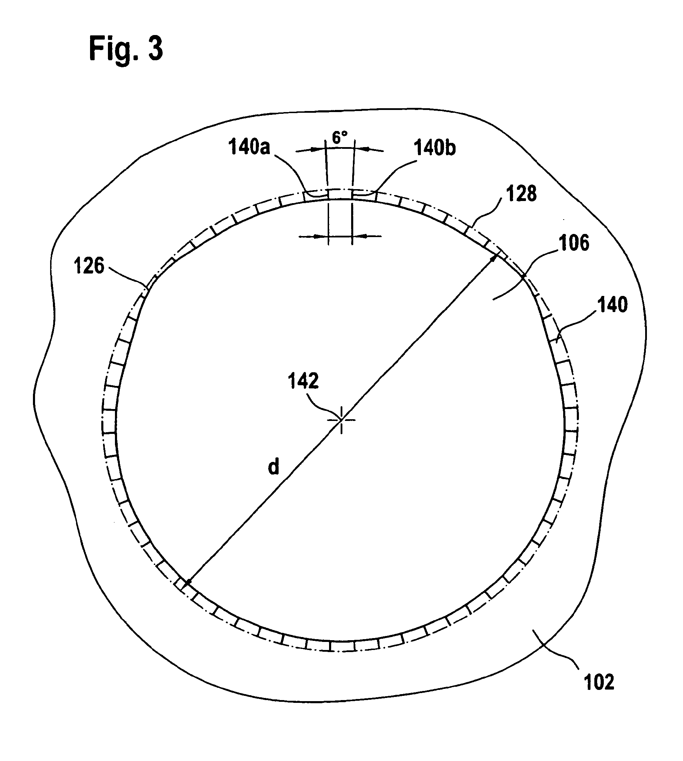

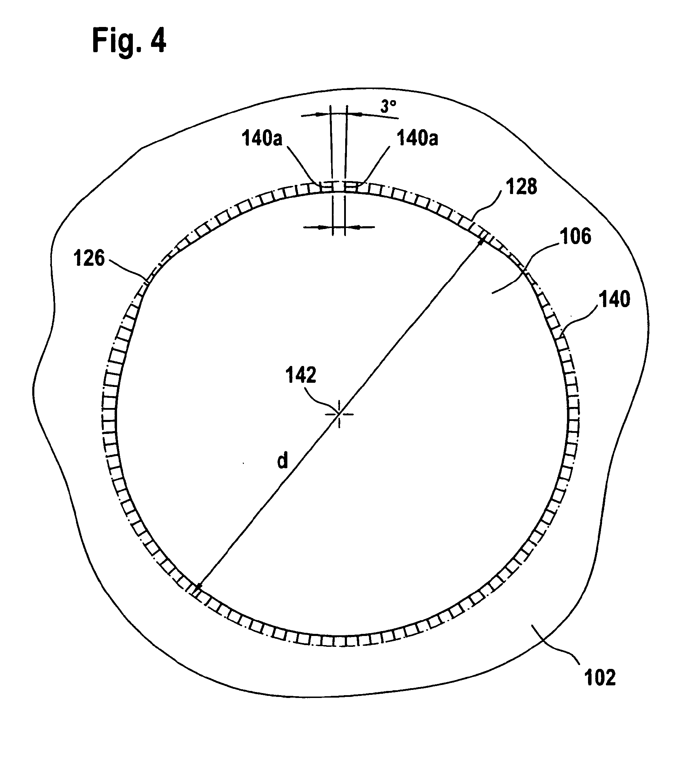

Bei dem in Fig. 3 dargestellten Ausführungsbeispiel beträgt der Winkelabstand zwischen längs der Umfangsrichtung der Brennraum-Durchgangsöffnung 106 aufeinanderfolgenden Einschnitten 140 jeweils 6°, und bei dem in Fig. 4 dargestellten Ausführungsbeispiel beträgt der Winkelabstand zwischen längs der Umfangsrichtung der Brennraum-Durchgangsöffnung 106 aufeinanderfolgenden Einschnitten 140 jeweils 3°.

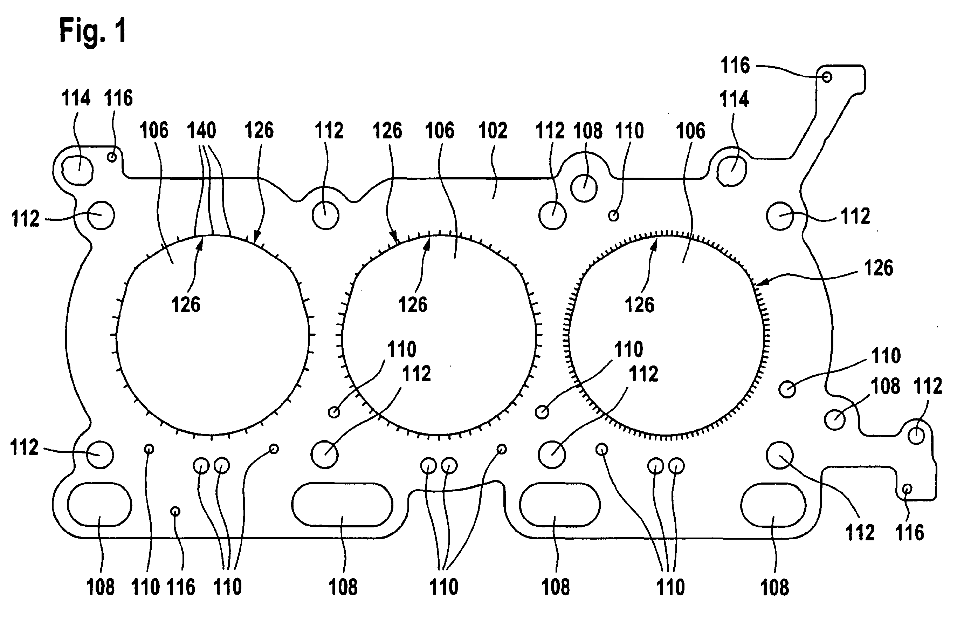

Bei der in Fig. 1 dargestellten Dichtungsplatte 104, welche in ihrem Zustand vor dem Umlegen der Randbereiche 126 der Brennraum-Durchgangsöffnung 106 gezeigt ist, sind die Winkelabstände der Einschnitte 140 an jeder der drei Brennraum-Durchgangsöffnungen 106 voneinander verschieden. Diese Darstellung dient jedoch nur der Illustration; in der Regel werden die Einschnitte 140 an den Randbereichen 126 aller Brennraum-Durchgangsöffnungen 106 derselben Dichtungsplatte 102 jeweils im wesentlichen denselben Winkelabstand voneinander aufweisen.

Die Winkelabstände der Einschnitte 140, die längs einer Brennraum-Durchgangsöffnung 106 aufeinanderfolgen, können auch längs des Umfangs derselben Brennraum-Durchgangsöffnung variieren.

Die Einschnitte 140 werden beispielsweise durch Einschneiden mittels eines mechanischen Schneidwerkzeugs, Ausstanzen mittels eines mechanischen Stanzwerkzeuges oder Laserschneiden mittels eines Laserstrahls erzeugt.

Vorzugsweise werden die Einschnitte 140 im wesentlichen materialverlustfrei in den Randbereichen 126 der Brennraum-Durchgangsöffnung 106 erzeugt.

Die in radialer Richtung verlaufenden seitlichen Ränder 144 der Einschnitte 140 sind vor dem Umlegen der Randbereiche 126 im wesentlichen parallel zueinander ausgerichtet. Erst nach dem Umlegen der Randbereiche 126 verlaufen diese seitlichen Ränder 144 keilförmig aufeinander zu, wie in Fig. 5 dargestellt.

Nach dem Umlegen ist die mittlere Länge L der einschnittfreien Bereiche des Außenrandes 134 des Flanschbereiches 132 zwischen den in der Längsrichtung des Bördelfalzes 124 aufeinanderfolgenden Einschnitten 140 größer als, vorzugsweise mindestens doppelt so groß wie, die mittlere Erstreckung I der Einschnitte 140 in der Längsrichtung des Bördelfalzes 124 am Außenrand des Flanschbereiches 132.

Wie am besten aus den Fig. 2 bis 4 zu ersehen ist, erstrecken sich die Einschnitte 140 vor dem Umlegen vom Rand der jeweiligen Brennraum-Durchgangsöffnung 106 nach außen bis zur Biegelinie 128, welche im wesentlichen kreisförmig mit dem Durchmesser d ausgebildet ist, oder geringfügig darüber hinaus.

Dies hat zur Folge, dass sich die Einschnitte 140 an der fertigen Dichtungsplatte 102, wie es in den Fig. 5 und 6 dargestellt ist, vom Außenrand 134 des Flanschbereiches 132 des Bördelfalzes 124 radial nach innen bis über die Biegelinie 128 beziehungsweise über den Innenrand 138 des Biegebereichs 136 hinaus in den Biegebereich 136 des Bördelfalzes 124 hinein erstrecken.

Auf diese Weise wird eine besonders starke Reduktion der Umfangsspannungen beim Umlegen der Randbereiche 126 erzielt.Wie aus den Fig. 2 bis 4 zu ersehen ist, können die Randbereiche 126 der Brennraum-Durchgangsöffnungen 106 vor dem Umlegen so ausgebildet sein, dass ihre Ränder nicht kreisförmig und konzentrisch zu der Biegelinie 128 verlaufen, sondern einen längs der Umfangsrichtung der Brennraum-Durchgangsöffnung 106 variierenden Abstand von der Biegelinie 128 aufweisen.

Da sich alle Einschnitte 140 jedoch vom Rand der Brennraum-Durchgangsöffnung 106 bis zur Biegelinie 128 oder geringfügig darüber hinaus erstrecken, weisen in diesem Falle die Einschnitte 140 also unterschiedliche radiale Ausdehnungen auf.

Zur Herstellung der in den Fig. 9 und 1 bis 6 dargestellten ersten Ausführungsform einer Zylinderkopfdichtung 100 wird wie folgt vorgegangen:

In einem Folgeverbundwerkzeug werden zuerst die Durchgangsöffnungen 106, 108, 110, 112, 114 und 116 aus einem Federstahlblech herausgestanzt.

Anschließend werden die Einschnitte 140 an den Randbereichen 126 der Brennraum-Durchgangsöffnungen 106 durch Ausstanzen, mechanisches Einschneiden und/oder Laserschneiden erzeugt.

Dann werden die Randbereiche 126 der Brennraum-Durchgangsöffnungen 106 mittels geeigneter Werkzeuge aus der Hauptebene der Dichtungsplatte 102 hochgestellt und anschließend auf die obere Hauptfläche 130 der Dichtungsplatte 102 umgelegt, so dass der in den Fig. 5 und 6 dargestellte Bördelfalz 124 erzeugt wird.

Die sich um die Brennraum-Durchgangsöffnungen 106 herum erstreckenden Sicken 118 können vor oder nach dem Umlegevorgang in die Dichtungsplatte 102 eingeprägt werden.

Anschließend wird die erste Dichtungsplatte 102 mit der getrennt hiervon hergestellten zweiten Dichtungsplatte 104, beispielsweise mittels sich durch die Niet-Durchgangsöffnungen 116 erstreckender Niete, zu der in Fig. 9 dargestellten zweilagigen Zylinderkopfdichtung 100 verbunden.

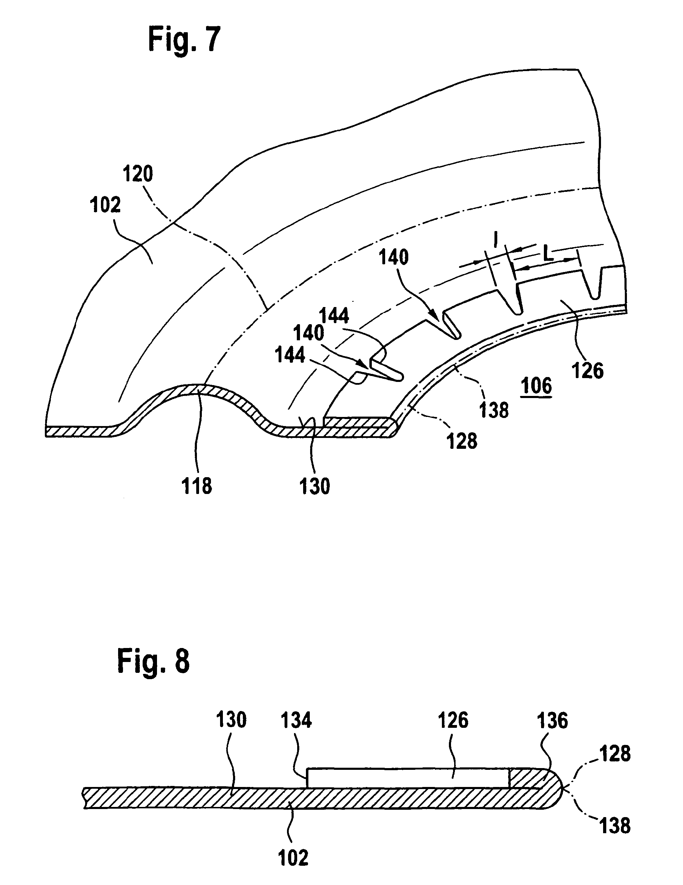

Eine in den Fig. 7 und 8 dargestellte zweite Ausführungsform einer Zylinderkopfdichtung 100 unterscheidet sich von der vorstehend beschriebenen ersten Ausführungsform dadurch, dass sich die Einschnitte 140 des Bördelfalzes 124 vom Außenrand 134 des Flanschbereiches 132 aus nicht bis in den Biegebereich 136 des Bördelfalzes 124 hinein erstrecken, sondern radial außerhalb des Biegebereiches 136 enden.

Dies wird dadurch erreicht, dass der Randbereich 126 der Brennraum-Durchgangsöffnung 106 vor dem Umlegen nicht bis zur Biegelinie 128 eingeschnitten wird, sondern die Einschnitte 140 radial innerhalb der Biegelinie 128 enden.

Diese Ausführungsform eignet sich insbesondere für solche Anwendungsfälle, bei denen die Breite des Flanschbereiches 132, das heißt dessen Ausdehnung senkrecht zur Biegelinie 128, vergleichsweise klein ist und/oder das metallische Material der Dichtungsplatte 102 eine relativ große Bruchdehnung aufweist.

Im übrigen stimmt die in den Fig. 7 und 8 dargestellte zweite Ausführungsform einer Zylinderkopfdichtung 100 hinsichtlich Aufbau, Funktion und Herstellungsweise mit der in den Fig. 9 und 1 bis 6 dargestellten ersten Ausführungsform überein, auf deren vorstehende Beschreibung insoweit Bezug benommen wird.

Eine in Fig. 10 dargestellte dritte Ausführungsform einer Zylinderkopfdichtung 100 unterscheidet sich von der in Fig. 9 dargestellten ersten Ausführungsform lediglich dadurch, dass sie zusätzlich zu der ersten metallischen Dichtungsplatte 102, welche um jede Brennraum-Durchgangsöffnung 106 mit jeweils einer Sicke 118 und einem Bördelfalz 124 versehen ist, und zu der zweiten metallischen Dichtungsplatte 104, welche um jede Brennraum-Durchgangsöffnung 106 mit jeweils einer Sicke 118' versehen ist, deren Kuppe der Kuppe der Sicke 118 zugewandt ist, eine dritte metallische Dichtungsplatte 146 umfasst, welche mit den Durchgangsöffnungen in den ersten beiden Dichtungsplatten 102, 104 fluchtende Durchgangsöffnungen aufweist und um jede Brennraum-Durchgangsöffnung 106 mit einer Sicke 118" versehen ist, deren Kuppe der Kuppe der Sicke 118 der ersten metallischen Dichtungsplatte 102 abgewandt ist, wobei die erste metallische Dichtungsplatte 102 mit dem Bördelfalz 124 zwischen den beiden weiteren metallischen Dichtungsplatten 104 und 146 angeordnet ist.

Im übrigen stimmt die in Fig. 10 dargestellte dritte Ausführungsform einer Zylinderkopfdichtung 100 hinsichtlich Aufbau, Funktion und Herstellungsweise mit der in Fig. 9 dargestellten ersten Ausführungsform überein, auf deren vorstehende Beschreibung insoweit Bezug genommen wird.

Eine in Fig. 11 dargestellte vierte Ausführungsform einer Zylinderkopfdichtung 100 unterscheidet sich von der in Fig. 9 dargestellten ersten Ausführungsform dadurch, dass die Zylinderkopfdichtung 100 zusätzlich zu der ersten metallischen Dichtungsplatte 102 mit der Sicke 118 und dem Bördelfalz 124 und zu der zweiten metallischen Dichtungsplatte 104 mit der Sicke 118' eine zwischen den metallischen Dichtungsplatten 102 und 104 angeordnete metallische Trägerplatte 148 umfasst, welche an einer Stelle, die näher an der Brennraum-Durchgangsöffnung 106 liegt als der der Brennraum-Durchgangsöffnung 106 zugewandte Sickenfuß 150 der Sicke 118 der ersten Dichtungsplatte 102 und weiter von der Brennraum-Durchgangsöffnung 106 entfernt liegt als der Außenrand 134 des Flanschbereiches 132 des Bördelfalzes 124 der ersten Dichtungsplatte 102, mit einer Abkröpfung 152 der Höhe Δ versehen ist.

Der um den Betrag Δ zu der zweiten Dichtungsplatte 104 hin abgekröpfte, radial innerhalb der Abkröpfung 152 liegende abgekröpfte Bereich 154 der Trägerplatte 148 kann dabei eine Dicke aufweisen, die durch Prägen gegenüber der Dicke s des radial außerhalb der Abkröpfung 152 liegenden Bereichs 156 der Trägerplatte 148 auf die reduzierte Dicke s - x verringert ist.

Diese Verringerung der Dicke des abgekröpften Bereichs 154 der Trägerplatte 148 dient dazu, die effektive Stopperdicke des Flanschbereichs 132 des Bördelfalzes 124 von der Dicke t des verwendeten Federstahlblechs (im Bereich von vorzugsweise 0,20 mm bis ungefähr 0,25 mm) auf eine erwünschte effektive Stopperdicke zu reduzieren.

Um für die Sicken 118 und 118' dieselbe effektive Stopperdicke zu erzielen, ist vorzugsweise vorgesehen, dass die Höhe Δ der Abkröpfung ungefähr der Hälfte der Differenz (t - x) entspricht.

Die Trägerplatte 148 ist vorzugsweise aus einem metallischen Material hergestellt, welches eine relativ geringe Zugfestigkeit (vorzugsweise eine Zugfestigkeit von höchstens ungefähr 400 N/mm²) und eine höhere Bruchdehnung (A₈₀ₘₘ) bei einer Anfangsmesslänge von 80 mm (vorzugsweise mindestens 24 %) als das metallische Material der ersten Dichtungsplatte 104 aufweist.

Im übrigen stimmt die in Fig. 11 dargestellte vierte Ausführungsform einer Zylinderkopfdichtung 100 hinsichtlich Aufbau, Funktion und Herstellungsweise mit der in Fig. 9 dargestellten ersten Ausführungsform überein, auf deren vorstehende Beschreibung insoweit Bezug genommen wird.

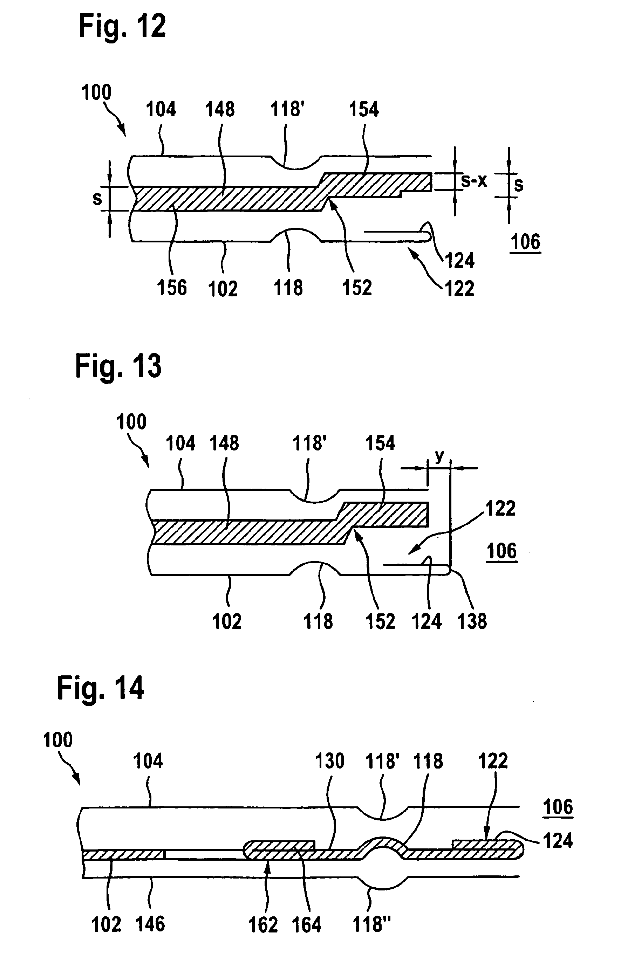

Eine in Fig. 12 dargestellte fünfte Ausführungsform einer Zylinderkopfdichtung 100 unterscheidet sich von der in Fig. 11 dargestellten vierten Ausführungsform dadurch, dass der abgekröpfte Bereich 154 der Trägerplatte 148 einen der Brennraum-Durchgangsöffnung 106 zugewandten inneren Abschnitt 158 mit der durch Prägen reduzierten Dicke s - x und einen zwischen dem inneren Abschnitt 158 und der Abkröpfung 152 liegenden äußeren Abschnitt 160 mit der Dicke s aufweist, welche der Dicke s des radial außerhalb der Abkröpfung 152 liegenden außenliegenden Bereichs 156 der Trägerplatte 148 entspricht.

Im übrigen stimmt die in Fig. 12 dargestellte fünfte Ausführungsform einer Zylinderkopfdichtung 100 hinsichtlich Aufbau, Funktion und Herstellungsweise mit der in Fig. 11 dargestellten vierten Ausführungsform überein, auf deren vorstehende Beschreibung insoweit Bezug genommen wird.

Eine in Fig. 13 dargestellte sechste Ausführungsform einer Zylinderkopfdichtung 100 unterscheidet sich von der in Fig. 11 dargestellten vierten Ausführungsform dadurch, dass der Bördelfalz 124 der ersten Dichtungsplatte 102 zum Mittelpunkt 142 der Brennraum-Durchgangsöffnung 106 hin um die Strecke y über den inneren Rand der Trägerplatte 148 und über den inneren Rand der zweiten metallischen Dichtungsplatte 104 hinaus vorsteht.

Im übrigen stimmt die in Fig. 13 dargestellte sechste Ausführungsform einer Zylinderkopfdichtung 100 hinsichtlich Aufbau, Funktion und Herstellungsweise mit der in Fig. 11 dargestellten vierten Ausführungsform überein, auf deren vorstehende Beschreibung insoweit Bezug genommen wird.

Eine in Fig. 14 dargestellte siebte Ausführungsform einer Zylinderkopfdichtung 100 unterscheidet sich von der in Fig. 10 dargestellten dritten Ausführungsform dadurch, dass die erste metallische Dichtungsplatte 102 außer mit der radial innerhalb der Sicke 118 angeordneten inneren Verformungsbegrenzungseinrichtung 122 in Form des Bördelfalzes 124 zusätzlich mit einer radial außerhalb der Sicke 118 angeordneten äußeren Verformungsbegrenzungseinrichtung 162 versehen ist, welche mehrere, längs der Umfangsrichtung der Brennraum-Durchgangsöffnung 106 aufeinanderfolgende Verformungsbegrenzungselemente 164 umfasst, die durch Heraustrennen jeweils eines Bereichs der metallischen Dichtungsplatte 102 und anschließendes Umlegen dieses Bereichs auf die obere Hauptfläche 130 der metallischen Dichtungsplatte 102 gebildet sind.

Äußere Verformungsbegrenzungseinrichtungen 162 dieser Art sind beispielsweise aus der DE 102 13 900 A1 bekannt, auf die insoweit Bezug genommen und deren diesbezüglicher Inhalt hiermit zum Bestandteil dieser Anmeldung gemacht wird.

Im übrigen stimmt die in Fig. 14 dargestellte siebte Ausführungsform einer Zylinderkopfdichtung 100 hinsichtlich Aufbau, Funktion und Herstellungsweise mit der in Fig. 10 dargestellten dritten Ausführungsform überein, auf deren vorstehende Beschreibung insoweit Bezug genommen wird.

## Patentansprüche

1. Flachdichtung, insbesondere Zylinderkopfdichtung, umfassend mindestens eine metallische Dichtungsplatte (102) aus einem Federstahl oder aus einem metallischen Material mit einer Bruchdehnung, welche der Bruchdehnung eines Federstahls entspricht,
wobei die Dichtungsplatte (102) mit mindestens einem Bördelfalz (124) versehen ist, der einen Biegebereich (136) und einen über den Biegebereich (136) einstückig mit der Dichtungsplatte (102) verbundenen Flanschbereich (132) umfasst,
**dadurch gekennzeichnet,**
**dass** der Bördelfalz (124) mehrere Einschnitte (140) aufweist, die sich von einem dem Biegebereich (136) abgewandten Außenrand (134) des Flanschbereiches (132) aus in Richtung auf den Biegebereich (136) erstrecken, und
**dass** die mittlere Länge (L) der einschnittfreien Bereiche des Außenrandes (134) des Flanschbereiches (132) zwischen den in der Längsrichtung des Bördelfalzes (124) aufeinanderfolgenden Einschnitten (140) größer ist als die mittlere Erstreckung (l) der Einschnitte (140) in der Längsrichtung des Bördelfalzes (124) am Außenrand (134) des Flanschbereiches (132).

2. Flachdichtung nach Anspruch 1, **dadurch gekennzeichnet, dass** die Dichtungsplatte (102) eine Durchgangsöffnung (106) aufweist und dass sich der Bördelfalz (124) zumindest längs eines Abschnittes des Umfangs der Durchgangsöffnung (106) erstreckt.

3. Flachdichtung nach Anspruch 2, **dadurch gekennzeichnet, dass** sich der Bördelfalz (124) zumindest teilweise um eine Brennraum-Durchgangsöffnung (106) der Dichtungsplatte (102) herum erstreckt.

4. Flachdichtung nach einem der Ansprüche 2 oder 3, **dadurch gekennzeichnet, dass** sich der Bördelfalz (124) um den gesamten Umfang der Durchgangsöffnung (106) herum erstreckt.

5. Flachdichtung nach einem der Ansprüche 2 bis 4, **dadurch gekennzeichnet, dass** die Flachdichtung (100) eine sich um die Durchgangsöffnung (106) herum erstreckende höhenverformbare Sicke (118) aufweist.

6. Flachdichtung nach Anspruch 5, **dadurch gekennzeichnet, dass** der Bördelfalz (124) eine Verformungsbegrenzungseinrichtung (122) bildet, welche die Höhenverformung der sich um die Durchgangsöffnung (106) herum erstreckenden Sicke (118) begrenzt.

7. Flachdichtung nach einem der Ansprüche 5 oder 6, **dadurch gekennzeichnet, dass** die Sicke (118) an derselben Dichtungsplatte (102) ausgebildet ist, welche auch mit dem Bördelfalz (124) versehen ist.

8. Flachdichtung nach einem der Ansprüche 6 oder 7, **dadurch gekennzeichnet, dass** die Flachdichtung (100) zusätzlich zu dem Bördelfalz (124) eine äußere Verformungsbegrenzungseinrichtung (162) umfasst, welche auf der der Durchgangsöffnung (106) abgewandten Seite der Sicke (118) angeordnet ist.

9. Flachdichtung nach Anspruch 8, **dadurch gekennzeichnet, dass** die äußere Verformungsbegrenzungseinrichtung (162) an derselben Dichtungsplatte (102) angeordnet ist, welche auch mit dem Bördelfalz (124) versehen ist.

10. Flachdichtung nach einem der Ansprüche 8 oder 9, **dadurch gekennzeichnet, dass** die äußere Verformungsbegrenzungseinrichtung (162) mindestens ein Verformungsbegrenzungselement (164) umfasst, das durch Heraustrennen eines Bereichs einer Dichtungsplatte (102) längs einer Trennlinie und anschließendes Herausbiegen dieses Bereichs aus der Ebene dieser Dichtungsplatte (102) gebildet ist.

11. Flachdichtung nach einem der Ansprüche 1 bis 10, **dadurch gekennzeichnet, dass** der Flanschbereich (132) auf die Dichtungsplatte (102) selbst umgelegt ist.

12. Flachdichtung nach einem der Ansprüche 1 bis 11, **dadurch gekennzeichnet, dass** sich mindestens einer der Einschnitte (140) vom Außenrand (134) des Flanschbereiches (132) aus bis in den Biegebereich (136) des Bördelfalzes (124) hinein erstreckt.

13. Flachdichtung nach Anspruch 12, **dadurch gekennzeichnet, dass** der Biegebereich (136) einen dem Flanschbereich (132) des Bördelfalzes (124) abgewandten Innenrand (138) aufweist und dass sich mindestens einer der Einschnitte (140) vom Außenrand (134) des Flanschbereiches (132) aus über den Innenrand (138) des Biegebereiches (136) hinweg erstreckt.

14. Flachdichtung nach einem der Ansprüche 1 bis 13, **dadurch gekennzeichnet, dass** sich der Bördelfalz (124) zumindest abschnittsweise um eine Durchgangsöffnung (106) mit einem Mittelpunkt (142) herum erstreckt und dass der auf den Mittelpunkt (142) der Durchgangsöffnung (106) bezogene Winkelabstand längs der Umfangsrichtung der Durchgangsöffnung (106) aufeinanderfolgender Einschnitte (140) ungefähr 1° bis ungefähr 20°, vorzugsweise ungefähr 2° bis ungefähr 15°, beträgt.

15. Flachdichtung nach einem der Ansprüche 1 bis 14, **dadurch gekennzeichnet, dass** der Bördelfalz (124) durch Erzeugen der Einschnitte (140) in einem Randbereich (126) einer Durchgangsöffnung (106) der Dichtungsplatte (102) und anschließendes Umlegen des Randbereiches (126) gebildet ist.

16. Flachdichtung nach einem der Ansprüche 1 bis 15, **dadurch gekennzeichnet, dass** die Einschnitte (140) durch im wesentlichen materialverlustfreies Einschneiden in die Dichtungsplatte (102) erzeugt sind.

17. Flachdichtung nach einem der Ansprüche 1 bis 16, **dadurch gekennzeichnet, dass** die Flachdichtung (100) mehrlagig ausgebildet ist.

18. Flachdichtung nach Anspruch 17, **dadurch gekennzeichnet, dass** die Flachdichtung (100) neben der Dichtungsplatte (102), die mit dem Bördelfalz (124) versehen ist, noch mindestens eine weitere Dichtungsplatte (104, 146) umfasst, welche mit mindestens einer sich um eine Durchgangsöffnung (106) herum erstreckenden Sicke (118', 118") versehen ist.

19. Flachdichtung nach einem der Ansprüche 17 oder 18, **dadurch gekennzeichnet, dass** die Flachdichtung (100) neben der Dichtungsplatte (102), die mit dem Bördelfalz (124) versehen ist, noch mindestens zwei weitere Dichtungsplatten (104, 146) umfasst, zwischen denen die Dichtungsplatte (102), die mit dem Bördelfalz (124) versehen ist, angeordnet ist.

20. Flachdichtung nach einem der Ansprüche 17 bis 19, **dadurch gekennzeichnet, dass** die Flachdichtung (100) neben der Dichtungsplatte (102), die mit dem Bördelfalz (124) versehen ist, noch mindestens eine Trägerplatte (148) mit einer Abkröpfung (152) umfasst.

21. Flachdichtung nach Anspruch 20, **dadurch gekennzeichnet, dass** sich der Bördelfalz (124) und die Abkröpfung (152) um eine Durchgangsöffnung (106) herum erstrecken und dass die Dichtungsplatte (102), die mit dem Bördelfalz (124) versehen ist, zum Mittelpunkt (142) der Durchgangsöffnung (106) hin über die Trägerplatte (148), die mit der Abkröpfung (152) versehen ist, übersteht.

22. Flachdichtung nach einem der Ansprüche 20 oder 21, **dadurch gekennzeichnet, dass** ein abgekröpfter Bereich (154) der Trägerplatte (148) sich um eine Durchgangsöffnung (106) herum erstreckt und einen der Durchgangsöffnung (106) zugewandten inneren Abschnitt (158) und einen der Durchgangsöffnung (106) abgewandten äußeren Abschnitt (160) umfasst, wobei der innere Abschnitt (158) eine geringere Dicke aufweist als der äußere Abschnitt (160).

23. Flachdichtung nach einem der Ansprüche 1 bis 22, **dadurch gekennzeichnet, dass** die Flachdichtung (100) neben der Dichtungsplatte (102), die mit dem Bördelfalz (124) versehen ist, mindestens eine weitere Dichtungsplatte (148) umfasst, die in dem Bereich, welcher der Lage des Flanschbereiches (132) des Bördelfalzes (124) entspricht, eine reduzierte Dicke aufweist.

24. Verfahren zum Herstellen einer Flachdichtung (100), insbesondere einer Zylinderkopfdichtung, die mindestens eine metallische Dichtungsplatte (102) aus einem Federstahl oder aus einem metallischen Material mit einer Bruchdehnung, welche der Bruchdehnung eines Federstahls entspricht, umfasst,
umfassend den folgenden Verfahrensschritt:
- Umlegen mindestens eines Bereiches (126) der metallischen Dichtungsplatte (102) zur Bildung eines auf die Dichtungsplatte (102) umgelegten Flanschbereiches (132) eines Bördelfalzes (124), der über einen Biegebereich (136) des Bördelfalzes (124) einstückig mit der Dichtungsplatte (102) verbunden ist,
**gekennzeichnet durch** folgende Verfahrensschritte:
- Erzeugen von mehreren Einschnitten (140) in der Dichtungsplatte (102);
- anschließendes Umlegen der zwischen den Einschnitten (140) liegenden Bereiche zur Bildung des auf die Dichtungsplatte (102) umgelegten Flanschbereiches (132) des Bördelfalzes (124);
wobei die Einschnitte (140) so erzeugt werden, dass nach erfolgtem Umlegen die mittlere Länge (L) der einschnittfreien Bereiche des Außenrandes (134) des Flanschbereiches (132) des Bördelfalzes (124) zwischen den in der Längsrichtung des Bördelfalzes (124) aufeinander folgenden Einschnitten (140) größer ist als die mittlere Erstreckung (l) der Einschnitte (140) in der Längsrichtung des Bördelfalzes (124) am Außenrand (134) des Flanschbereiches (132).

25. Verfahren nach Anspruch 24, **dadurch gekennzeichnet, dass** die Einschnitte (140) durch mechanisches Einschneiden oder durch Laserschneiden in die Dichtungsplatte (102) oder durch Ausstanzen aus der Dichtungsplatte (102) erzeugt werden.

26. Verfahren nach einem der Ansprüche 24 oder 25, **dadurch gekennzeichnet, dass** die Einschnitte (140) durch im wesentlichen materialverlustfreies Einschneiden in die Dichtungsplatte (102) erzeugt werden.

## Claims

1. Flat gasket, in particular cylinder head gasket, comprising at least one metal gasket sheet (102) made of a spring steel or a metallic material with an elongation at fracture corresponding to the elongation at fracture of a spring steel,
wherein the gasket sheet (102) is provided with at least one edging fold (124), which comprises a bending region (136) and a flange region (132) connected in one piece to the gasket sheet (102) via the bending region (136),
**characterised in that**
the edging fold (124) has several incisions (140), which extend from an outer edge (134) of the flange region (132) remote from the bending region (136) towards the bending region (136), and
that the average length (L) of the incision-free regions of the outer edge (134) of the flange region (132) between the incisions (140) arranged consecutively in the longitudinal direction of the edging fold (124) is greater than the average extent (1) of the incisions (140) in the longitudinal direction of the edging fold (124) at the outer edge (134) of the flange region (132).

2. Flat gasket according to Claim 1, **characterised in that** the gasket sheet (102) has a through hole (106) and that the edging fold (124) extends at least along one section of the periphery of the hole (106).

3. Flat gasket according to Claim 2, **characterised in that** the edging fold (124) extends at least partially around a combustion space hole (106) of the gasket sheet (102).

4. Flat gasket according to one of Claims 2 or 3, **characterised in that** the edging fold (124) extends around the entire periphery of the hole (106).

5. Flat gasket according to one of Claims 2 to 4, **characterised in that** the flat gasket (100) has a vertically deformable bead (118) extending around the hole (106).

6. Flat gasket according to Claim 5, **characterised in that** the edging fold (124) forms a deformation restriction means (122), which restricts the vertical deformation of the bead (118) extending around the hole (106).

7. Flat gasket according to one of Claims 5 or 6, **characterised in that** the bead (118) is configured on the same gasket sheet (102), which is also provided with the edging fold (124).

8. Flat gasket according to one of Claims 6 or 7, **characterised in that** in addition to the edging fold (124) the flat gasket (100) comprises an outer deformation restriction means (162), which is arranged on the side of the bead (118) remote from the hole (106).

9. Flat gasket according to Claim 8, **characterised in that** the outer deformation restriction means (162) is arranged on the same gasket sheet (102), which is also provided with the edging fold (124).

10. Flat gasket according to one of Claims 8 or 9, **characterised in that** the outer deformation restriction means (162) comprises at least one deformation restriction element (164), which is formed by separating a region of a gasket sheet (102) along a separating line and subsequently bending this region out of the plane of this gasket sheet (102).

11. Flat gasket according to one of Claims 1 to 10, **characterised in that** the flange region (132) is folded over onto the gasket sheet (102) itself.

12. Flat gasket according to one of Claims 1 to 11, **characterised in that** at least one of the incisions (140) extends from the outer edge (134) of the flange region (132) into the bending region (136) of the edging fold (124).

13. Flat gasket according to Claim 12, **characterised in that** the bending region (136) has an inner edge (138) remote from the flange region (132) of the edging fold (124), and that at least one of the incisions (140) extends from the outer edge (134) of the flange region (132) and beyond the inner edge (138) of the bending region (136).

14. Flat gasket according to one of Claims 1 to 13, **characterised in that** the edging fold (124) extends at least in sections around a through hole (106) with a centre point (142), and that the angular distance relative to the centre point (142) of the hole (106) of consecutive incisions (140) in the peripheral direction of the hole (106) amounts to approximately 1° to approximately 20°, preferably approximately 2° to approximately 15°.

15. Flat gasket according to one of Claims 1 to 14, **characterised in that** the edging fold (124) is formed by generating the incisions (140) in an edge region (126) of a through hole (106) of the gasket sheet (102) and subsequently folding over the edge region (126).

16. Flat gasket according to one of Claims 1 to 15, **characterised in that** the incisions (140) are generated by cutting into the gasket sheet (102) in a manner substantially without material loss.

17. Flat gasket according to one of Claims 1 to 16, **characterised in that** the flat gasket (100) is multilayered.

18. Flat gasket according to Claim 17, **characterised in that** besides the gasket sheet (102), which is provided with the edging fold (124), the flat gasket (100) additionally comprises at least one further gasket sheet (104, 146), which is provided with at least one bead (118', 118") extending around a through hole (106).

19. Flat gasket according to one of Claims 17 or 18, **characterised in that** besides the gasket sheet (102), which is provided with the edging fold (124), the flat gasket (100) additionally comprises at least two further gasket sheets (104, 146), between which the gasket sheet (102) provided with the edging fold (124) is arranged.

20. Flat gasket according to one of Claims 17 to 19, **characterised in that** besides the gasket sheet (102), which is provided with the edging fold (124), the flat gasket (100) additionally comprises at least one support sheet (148) with an offset section (152).

21. Flat gasket according to Claim 20, **characterised in that** the edging fold (124) and the offset section (152) extend around a through hole (106), and that the gasket sheet (102), which is provided with the edging fold (124), projects towards the centre point (142) of the hole (106) and over the support sheet (148), which is provided with the offset section (152).

22. Flat gasket according to one of Claims 20 or 21, **characterised in that** an offset region (154) of the support sheet (148) extends around a through hole (106) and comprises an inner section (158) facing the hole (106) and an outer section (160) facing away from the hole (106), wherein the inner section (158) has a smaller thickness than the outer section (160).

23. Flat gasket according to one of Claims 1 to 22, **characterised in that** besides the gasket sheet (102), which is provided with the edging fold (124), the flat gasket (100) comprises at least one further gasket sheet (148), which has a reduced thickness in the region corresponding to the position of the flange region (132) of the edging fold (124).

24. Process for the production of a flat gasket (100), in particular a cylinder head gasket, which comprises at least one metal gasket sheet (102) made of a spring steel or a metallic material with an elongation at fracture corresponding to the elongation at fracture of a spring steel,
comprising the following process step:
• folding at least one region (126) of the metal gasket sheet (102) over to form a flange region (132) of an edging fold (124) folded over onto the gasket sheet (102), said flange region being connected in one piece to the gasket sheet (102) via a bending region (136) of the edging fold (124),
**characterised by** the following process steps:
• producing a plurality of incisions (140) in the gasket sheet (102);
• subsequently folding the regions located between the incisions (140) over to form the flange region (132) of the edging fold (124) folded over onto the gasket sheet (102);
wherein the incisions (140) are generated such that, after folding has occurred, the average length (L) of the incision-free regions of the outer edge (134) of the flange region (132) of the edging fold (124) between the incisions (140) arranged consecutively in the longitudinal direction of the edging fold (124) is greater than the average extent (1) of the incisions (140) in the longitudinal direction of the edging fold (124) at the outer edge (134) of the flange region (132).

25. Process according to Claim 24, **characterised in that** the incisions (140) are produced by mechanically cutting or cutting by laser into the gasket sheet (102) or by punching out of the gasket sheet (102).

26. Process according to one of Claims 24 or 25, **characterised in that** the incisions (140) are produced by cutting into the gasket sheet (102) in a manner substantially without material loss.

## Revendications

1. Joint d'étanchéité plat, notamment joint de culasse, comprenant au moins une plaque d'étanchéité (102) métallique en un acier à ressort ou en un matériau métallique avec un allongement de rupture qui correspond à l'allongement de rupture d'un acier à ressort,
la plaque d'étanchéité (102) étant pourvue d'au moins un collet rabattu de bordure (124), qui comprend une zone de pliage (136) et une zone de flasque (132) reliée d'un seul tenant à la plaque d'étanchéité (102) par l'intermédiaire de la zone de pliage (136),
**caractérisé**
**en ce que** le collet rabattu de bordure (124) présente plusieurs entailles (140) s'étendant à partir d'un bord extérieur (134) de la zone de flasque (132), qui est opposé à la zone de pliage (136), en direction de la zone de pliage (136), et
**en ce que** la longueur moyenne (L) des zones exemptes d'entaille du bord extérieur (134) de la zone de flasque (132), entre les entailles (140) se succédant dans la direction longitudinale du collet rabattu de bordure (124), est plus grande que l'étendue moyenne (1) des entailles (140) dans la direction longitudinale du collet rabattu de bordure (124), au niveau du bord extérieur (134) de la zone de flasque (132).

2. Joint d'étanchéité plat selon la revendication 1, **caractérisé en ce que** la plaque d'étanchéité (102) présente une ouverture de passage (106), et **en ce que** le collet rabattu de bordure (124) s'étend au moins le long d'un tronçon de la périphérie de l'ouverture de passage (106).

3. Joint d'étanchéité plat selon la revendication 2, **caractérisé en ce que** le collet rabattu de bordure (124) s'étend au moins partiellement autour d'une ouverture de passage de chambre de combustion (106) de la plaque d'étanchéité (102).

4. Joint d'étanchéité plat selon l'une des revendications 2 ou 3, **caractérisé en ce que** le collet rabattu de bordure (124) s'étend autour de la totalité de la périphérie de l'ouverture de passage (106).

5. Joint d'étanchéité plat selon l'une des revendications 2 à 4, **caractérisé en ce que** le joint d'étanchéité plat (100) comporte une moulure (118) déformable en hauteur, qui s'étend autour de l'ouverture de passage (106).

6. Joint d'étanchéité plat selon la revendication 5, **caractérisé en ce que** le collet rabattu de bordure (124) constitue un dispositif de limitation de déformation (122) qui limite la déformation en hauteur de la moulure (118) qui s'étend autour de l'ouverture de passage (106).

7. Joint d'étanchéité plat selon l'une des revendications 5 ou 6, **caractérisé en ce que** la moulure (118) est réalisée sur la même plaque d'étanchéité (102) que celle qui est également pourvue du collet rabattu de bordure (124).

8. Joint d'étanchéité plat selon l'une des revendications 6 ou 7, **caractérisé en ce que** le joint d'étanchéité plat (100) comprend en plus du collet rabattu de bordure (124), un dispositif de limitation de déformation extérieur (162), qui est agencé sur le côté de la moulure (118) opposé à celui où se trouve l'ouverture de passage (106).

9. Joint d'étanchéité plat selon la revendication 8, **caractérisé en ce que** le dispositif de limitation de déformation extérieur (162) est agencé sur la même plaque d'étanchéité (102) que celle qui est également pourvue du collet rabattu de bordure (124).

10. Joint d'étanchéité plat selon l'une des revendications 8 ou 9, **caractérisé en ce que** le dispositif de limitation de déformation extérieur (162) comprend au moins un élément de limitation de déformation (164), qui est formé par sectionnement ou découpe d'une zone d'une plaque d'étanchéité (102) le long d'une ligne de sectionnement, suivi du pliage de cette zone hors du plan de cette plaque d'étanchéité (102).

11. Joint d'étanchéité plat selon l'une des revendications 1 à 10, **caractérisé en ce que** la zone de flasque (132) est rabattue sur la plaque d'étanchéité (102) elle-même.

12. Joint d'étanchéité plat selon l'une des revendications 1 à 11, **caractérisé en ce qu'**au moins l'une des entailles (140) s'étend à partir du bord extérieur (134) de la zone de flasque (132) jusqu'à l'intérieur de la zone de pliage (136) du collet rabattu de bordure (124).

13. Joint d'étanchéité plat selon la revendication 12, **caractérisé en ce que** la zone de pliage (136) présente un bord intérieur (138) éloigné de la zone de flasque (132) du collet rabattu de bordure (124), et **en ce que** l'une au moins des entailles (140) s'étend du bord extérieur (134) de la zone de flasque (132), au-delà du bord intérieur (138) de la zone de pliage (136).

14. Joint d'étanchéité plat selon l'une des revendications 1 à 13, **caractérisé en ce que** le collet rabattu de bordure (124) s'étend au moins par tronçons autour d'une ouverture de passage (106) de centre (142), et **en ce que** l'espacement angulaire d'entailles (140) successives, rapporté au centre (142) de l'ouverture de passage (106), le long de la direction périphérique de l'ouverture de passage (106), vaut environ 1° jusqu'à environ 20°, de préférence environ 2° jusqu'à environ 15°.

15. Joint d'étanchéité plat selon l'une des revendications 1 à 14, **caractérisé en ce que** le collet rabattu de bordure (124) est formé par la réalisation des entailles (140) dans une zone de bordure (126) d'une ouverture de passage (106) de la plaque d'étanchéité (102), suivi du pliage de rabattement de la zone de bordure (126).

16. Joint d'étanchéité plat selon l'une des revendications 1 à 15, **caractérisé en ce que** les entailles (140) sont produites par incision sensiblement sans perte de matière, dans la plaque d'étanchéité (102).

17. Joint d'étanchéité plat selon l'une des revendications 1 à 16, **caractérisé en ce que** le joint d'étanchéité plat (100) est d'une configuration à couches multiples.

18. Joint d'étanchéité plat selon la revendication 17, **caractérisé en ce que** le joint d'étanchéité plat (100) comprend, en plus de la plaque d'étanchéité (102) qui est pourvue du collet rabattu de bordure (124), encore au moins une autre plaque d'étanchéité (104, 146) qui est pourvue d'au moins une moulure (118', 118") s'étendant autour d'une ouverture de passage (106).

19. Joint d'étanchéité plat selon l'une des revendications 17 ou 18, **caractérisé en ce que** le joint d'étanchéité plat (100) comprend, en plus de la plaque d'étanchéité (102) qui est pourvue du collet rabattu de bordure (124), encore au moins deux autres plaques d'étanchéité (104, 146) entre lesquelles est agencée la plaque d'étanchéité (102) pourvue du collet rabattu de bordure (124).

20. Joint d'étanchéité plat selon l'une des revendications 17 à 19, **caractérisé en ce que** le joint d'étanchéité plat (100) comprend, en plus de la plaque d'étanchéité (102) qui est pourvue du collet rabattu de bordure (124), encore au moins une plaque de support (148) comportant un décrochement (152).

21. Joint d'étanchéité plat selon la revendication 20, **caractérisé en ce que** le collet rabattu de bordure (124) et le décrochement (152) s'étendent autour d'une ouverture de passage (106), et **en ce que** la plaque d'étanchéité (102) qui est pourvue du collet rabattu de bordure (124), dépasse, en direction du centre (142) de l'ouverture de passage (106), de la plaque de support (148) qui est pourvue du décrochement (152).

22. Joint d'étanchéité plat selon l'une des revendications 20 ou 21, **caractérisé en ce qu'**une zone en décrochement (154) de la plaque de support (148) s'étend autour d'une ouverture de passage (106) et comprend un tronçon intérieur (158) dirigé vers l'ouverture de passage (106) et un tronçon extérieur (160) éloigné de l'ouverture de passage (106), le tronçon intérieur (158) présentant une épaisseur moindre que le tronçon extérieur (160).

23. Joint d'étanchéité plat selon l'une des revendications 1 à 22, **caractérisé en ce que** le joint d'étanchéité plat (100) comprend en plus de la plaque d'étanchéité (102) qui est pourvue du collet rabattu de bordure (124), au moins une autre plaque d'étanchéité (148) qui dans la zone correspondant à la position de la zone de flasque (132) du collet rabattu de bordure (124), présente une épaisseur réduite.

24. Procédé de fabrication d'un joint d'étanchéité plat (100), notamment d'un joint de culasse, comprenant au moins une plaque d'étanchéité (102) métallique en un acier à ressort ou en un matériau métallique avec un allongement de rupture qui correspond à l'allongement de rupture d'un acier à ressort,
englobant l'étape de procédé suivante :
- pliage de rabattement d'au moins une zone (126) de la plaque d'étanchéité (102) métallique pour former une zone de flasque (132) d'un collet rabattu de bordure (124), qui est rabattue sur la plaque d'étanchéité (102) et est reliée d'un seul tenant à la plaque d'étanchéité (102), par l'intermédiaire d'une zone de pliage (136) du collet rabattu de bordure (124),
**caractérisé par** les étapes de procédé de suivantes :
- réalisation de plusieurs entailles (140) dans la plaque d'étanchéité (102) ;
- pliage de rabattement des zones situées entre les entailles (140) pour former la zone de flasque (132) du collet rabattu de bordure (124), qui est rabattue sur la plaque d'étanchéité (102) ;
les entailles (140) étant réalisées de façon telle qu'après rabattement, la longueur moyenne (L) des zones exemptes d'entaille du bord extérieur (134) de la zone de flasque (132), entre les entailles (140) se succédant dans la direction longitudinale du collet rabattu de bordure (124), soit plus grande que l'étendue moyenne (1) des entailles (140) dans la direction longitudinale du collet rabattu de bordure (124), au niveau du bord extérieur (134) de la zone de flasque (132).

25. Procédé selon la revendication 24, **caractérisé en ce que** les entailles (140) sont réalisées par incision mécanique ou par coupe au laser dans la plaque d'étanchéité (102), ou bien par découpe par matriçage de la plaque d'étanchéité (102).

26. Procédé selon l'une des revendications 24 ou 25, **caractérisé en ce que** les entailles (140) sont réalisées par incision sensiblement sans pertes de matière, dans la plaque d'étanchéité (102).
